# EUROPÄISCHE PATENTANMELDUNG

(11) **EP 3 037 201 A1**
(43) Veröffentlichungstag der Anmeldung: **29.06.2016**
(21) Anmeldenummer: 14199718.9
(22) Anmeldetag: 22.12.2014
(51) Int. Cl.: B23D 65/00, B28D 1/04, B28D 1/12

(54) **Verfahren zur Herstellung eines geschlossenen Bohrringes für eine Kernbohrkrone**

(71) Anmelder: HILTI Aktiengesellschaft, 9494 Schaan (LI)
(72) Erfinder: Mueller, Matthias, 9470 Buchs (CH); Sonderegger, Marcel, 9435 Heerbrugg (CH)
(74) Vertreter: Hilti Aktiengesellschaft Corporate Intellectual Property

(57) **Zusammenfassung**

Verfahren zur Herstellung eines geschlossenen Bohrringes (51) für eine Kernbohrkrone, mit den Schritten:
▪ mindestens zwei Grünteile werden in einer Aufbaurichtung durch aufeinanderfolgen-des Auftragen von Pulverschichten eines Pulvergemisches und Diamantschichten mit Diamantpartikeln, die in einem Setzmuster angeordnet sind, zwischen einer Unterseite und einer Oberseite schichtweise aufgebaut,
▪ die Grünteile werden unter Druckeinwirkung zu Ringabschnitten (62, 63) umgeformt und
▪ die Ringabschnitte (62, 63) werden ringförmig zusammengesetzt und unter Temperatureinwirkung zu einem geschlossenen Bohrring (51) gesintert.

## Beschreibung

### Technisches Gebiet

Die vorliegende Erfindung betrifft ein Verfahren zur Herstellung eines geschlossenen Bohrringes für eine Kernbohrkrone gemäß dem Oberbegriff des Anspruchs 1.

### Stand der Technik

Bei Diamantwerkzeugen, die als Kernbohrkronen ausgebildet sind, wird zwischen Kernbohrkronen mit einem geschlossenen Bohrring und segmentierten Kernbohrkronen mit einzelnen Schneidsegmenten unterschieden. Kernbohrkronen bestehen aus einem Bearbeitungsabschnitt, einem zylinderförmigen Bohrschaft und einem Aufnahmeabschnitt mit Einsteckende. Die Kernbohrkrone wird über das Einsteckende in der Werkzeugaufnahme eines Kernbohrgerätes befestigt und im Bohrbetrieb vom Kernbohrgerät um eine Drehachse angetrieben.

Geschlossene Bohrringe werden aus einem Pulvergemisch mit statistisch verteilten Diamantpartikeln hergestellt. Das Pulvergemisch wird in eine Werkzeugform gefüllt und zu einem Grünteil gepresst; das Grünteil wird unter Temperatur- und Druckeinwirkung zu einem geschlossenen Bohrring gesintert. US 5,316,416 offenbart den Aufbau von geschlossenen Bohrringen, die über die gesamte Höhe des Bohrringes gute Abtrageigenschaften aufweisen. Die Bohrringe weisen mehrere obere Schlitze und untere Schlitze auf, die entlang der Umfangsrichtung der Bohrringe verteilt sind. Die oberen Schlitze erstrecken sich über die halbe Höhe der Bohrringe und münden in die dem Bohrschaft abgewandte Bearbeitungsfläche der Bohrringe. Die unteren Schlitze sind entlang der Umfangsrichtung der Bohrringe jeweils zwischen den oberen Schlitzen angeordnet und münden in die dem Bohrschaft zugewandte Anbindungsfläche der Bohrringe. Die oberen und unteren Schlitze überlappen sich in der Höhe der Bohrringe. Durch die Verteilung der oberen und unteren Schlitze über die gesamte Höhe der Bohrringe wird eine Kühl- und Spülflüssigkeit über die gesamte Einsatzzeit des Bohrringes an die Bearbeitungsstelle transportiert und abgetragenes Material wird aus dem Bohrbereich entfernt.

Bei der Herstellung von Schneidsegmenten für segmentierte Kernbohrkronen haben sich im Profibereich Verfahren etabliert, bei denen die Diamantpartikel in einem vorgegebenen Setzmuster angeordnet werden. Ein Grünteil wird schichtweise aus Pulverschichten, die ein Pulvergemisch enthalten, und Diamantschichten mit Diamantpartikeln, die in einem Setzmuster angeordnet sind, aufgebaut und anschließend unter Temperatur- und Druckeinwirkung zum Schneidsegment gesintert. Die Schneidsegmente werden entlang einer Umfangsrichtung des zylinderförmigen Bohrschaftes angeordnet und mit dem Bohrschaft verschweißt, verlötet und auf andere Weise befestigt. Die Schneidgeschwindigkeit, die mit einer segmentierten Kernbohrkrone erreichbar ist, hängt wesentlich von der Anordnung der Diamanten im Schneidsegment ab. Beim schichtweisen Aufbau kann die Anordnung der Diamantpartikel über die Anzahl an Diamantschichten, den Abstand zwischen den Diamantschichten und die Größe der Diamantpartikel beeinflusst werden.

### Darstellung der Erfindung

Die Aufgabe der vorliegenden Erfindung besteht darin, die Technologie der gesetzten Diamantpartikel auf geschlossene Bohrringe anzuwenden und die Bearbeitungsqualität, die mit den so hergestellten Bohrringen erreichbar ist, zu erhöhen.

Diese Aufgabe wird bei dem eingangs genannten Verfahren zur Herstellung eines geschlossenen Bohrringes für eine Kernbohrkrone erfindungsgemäß durch die Merkmale des unabhängigen Anspruchs 1 gelöst. Vorteilhafte Weiterbildungen sind in den abhängigen Ansprüchen angegeben.

Das erfindungsgemäße Verfahren zur Herstellung eines geschlossenen Bohrringes umfasst die Schritte:
▪ mindestens zwei Grünteile werden in einer Aufbaurichtung durch aufeinanderfolgendes Auftragen von Pulverschichten eines Pulvergemisches und Diamantschichten mit Diamantpartikeln, die in einem Setzmuster angeordnet sind, zwischen einer Unterseite und einer Oberseite schichtweise aufgebaut,
▪ die Grünteile werden unter Druckeinwirkung zu Ringabschnitten umgeformt und
▪ die Ringabschnitte werden ringförmig zusammengesetzt und unter Temperatureinwirkung zu einem geschlossenen Bohrring gesintert.

Das erfindungsgemäße Verfahren umfasst drei Verfahrensabschnitte, die unterschiedliche Technologien nutzen. Im ersten Verfahrensabschnitt werden mehrere Grünteile schichtweise aus Pulverschichten, die ein Pulvergemisch enthalten, und Diamantschichten mit Diamantpartikeln aufgebaut. Unter dem Begriff "Pulvergemisch" werden feinkörnige Pulvermischungen und granulierte Pulvermischungen zusammengefasst; die Verwendung von granulierten Pulvermischungen ist Voraussetzung zum volumetrischen Kaltpressen. Als Pulvergemisch können Eisen-, Kobalt- und/oder Bronzepulver verwendet werden; durch Zumischen von Zusätzen, wie beispielsweise Wolframkarbid, können die Eigenschaften der Bohrringe (Verschleißwiderstand, Lebensdauer, Schnittfreudigkeit) beeinflusst werden. Außerdem hat die Zusammensetzung des Pulvergemisches Einfluss auf die Sintertemperatur. Unter dem Begriff "Diamantpartikel" werden einzelne Diamantpartikel als auch umhüllte oder beschichtete Diamantpartikel zusammengefasst.

Die Grünteile weisen nach dem schichtweisen Aufbau die geometrische Form eines geraden Prismas mit einer mehreckigen Grundfläche auf. Die prismenförmigen Grünteile werden im zweiten Verfahrensabschnitt unter Druckeinwirkung zu Ringabschnitten umgeformt. Das Umformen der Grünteile findet bei Temperaturen statt, die unterhalb der Schmelztemperatur des Pulvergemisches liegen. Im dritten Verfahrensabschnitt werden die Ringabschnitte ringförmig zusammengesetzt und unter Temperatureinwirkung zu einem geschlossenen Bohrring gesintert. Beim Sintern der Ringabschnitte erfolgen zum einen eine Verdichtung der einzelnen Ringabschnitte und zum anderen eine Verbindung zwischen benachbarten Ringabschnitten.

Als Umformverfahren eignen sich Kaltpressen, Warmpressen sowie vergleichbare Verfahren. Beim Kaltpressen wird ein Grünteil unter einem hohen Druck in die vorgegebene Form gebracht. In einer Kaltpresse erwärmt der Werkstoff sich zwar, allerdings findet die Umformung in einem Temperaturbereich statt, in dem keine Rekristallisation auftritt; der Werkstoff verformt sich, ohne dass die Festigkeit deutlich abnimmt. Beim Warmpressen, das auch als Gesenkschmieden bezeichnet wird, wird ein Grünteil unter einem hohen Druck und dem Zusatz von Wärme in seine endgültige Form gebracht. Zusätzlich zur Form verändert das Schmiedestück seine Materialstruktur; es wird fester und erhält dadurch ein dichteres Gefüge und eine homogene Oberfläche.

Sintern ist ein Verfahren zur Herstellung von Werkstoffen, bei dem ein Pulver oder ein Grünteil (gepresstes Pulver) auf Temperaturen unterhalb der Schmelztemperatur erhitzt werden, um die Festigkeit durch Verbinden der einzelnen Pulverpartikel zu erhöhen. Der Sintervorgang läuft in drei Stadien ab, in denen sich die Porosität und das Volumen des Grünteils deutlich verringern. Im ersten Stadium des Sinterns erfolgt lediglich eine Verdichtung des Grünteils, wohingegen sich im zweiten Stadium die offene Porosität deutlich verringert. Die Festigkeit der Sinterkörper beruht auf den, im dritten Stadium gebildeten Sinterverbindungen (Anschmelzungen zwischen den Pulverpartikeln), die durch Oberflächendiffusion zwischen den Pulverpartikeln entstehen. Heißpressen ist ein spezielles Sinterverfahren, bei dem neben Temperatur auch äußerer Druck aufgewendet wird.

Der Bohrring wird beim erfindungsgemäßen Verfahren nicht als geschlossener Bohrring aufgebaut, sondern wird aus zwei oder mehr Ringabschnitten zusammengesetzt, die durch Sintern verbunden werden. Beim schichtweisen Aufbau der Grünteile werden die bekannten Technologien bei der Herstellung von Schneidsegmenten für segmentierte Kernbohrkronen eingesetzt.

In einer bevorzugten Variante des Verfahrens wird der Bohrring aus einer Anzahl von n, n ≥ 1 ersten Grünteilen, die zu ersten Ringabschnitten umgeformt werden, und n zweiten Grünteilen, die zu zweiten Ringabschnitten umgeformt werden, aufgebaut, wobei die ersten und zweiten Ringabschnitte entlang einer Umfangsrichtung des Bohrringes abwechselnd hintereinander angeordnet werden. Die Herstellung des Bohrringes aus ersten und zweiten Grünteilen ermöglicht die Anpassung des Bohrringes an unterschiedliche zu bearbeitende Untergründe. Beim Kernbohren in Betonwerkstoffe mit eingebetteten Armierungseisen, die auch als armierte Betonwerkstoffe bezeichnet werden, trifft ein Bohrring beispielsweise auf unterschiedliche Untergründe in Form von Beton und Armierungseisen.

Besonders bevorzugt werden die ersten Ringabschnitte aus einem ersten Pulvergemisch und ersten Diamantpartikeln und die zweiten Ringabschnitte aus einem zweiten Pulvergemisch und zweiten Diamantpartikeln aufgebaut. Die Anpassung des Bohrringes an den zu bearbeitenden Untergrund kann über die Auswahl des Pulvergemisches und die Auswahl der Diamantpartikel erfolgen. Beim Pulvergemisch kann die Zusammensetzung der Werkstoffe variiert werden; bei den Diamantpartikeln können der mittlere Diamantdurchmesser, die Diamantverteilung und die Anzahl der Diamantpartikel variiert werden.

In einer alternativen bevorzugten Variante des Verfahrens wird der Bohrring aus einer Anzahl von 2n, n ≥ 1 gleichen Grünteilen aufgebaut, wobei n Grünteile unter Druckeinwirkung mit einer konvexen Krümmung zu ersten Ringabschnitten und n Grünteile unter Druckeinwirkung mit einer konkaven Krümmung zu zweiten Ringabschnitten umgeformt werden. Durch die Verwendung von gleichen Grünteilen kann der apparative Aufwand beim schichtweisen Aufbau der Grünteile reduziert werden; es werden nur ein Pulvergemisch und eine Sorte an Diamantpartikeln benötigt.

Besonders bevorzugt wird die Oberseite der Grünteile bei den ersten Ringabschnitten auf der Außenseite und bei den zweiten Ringabschnitten auf der Innenseite angeordnet, wobei die ersten und zweiten Ringabschnitte entlang einer Umfangsrichtung des Bohrringes abwechselnd hintereinander angeordnet werden. Durch die unterschiedliche Krümmung der Ringabschnitte können aus gleichen Grünteilen zwei verschiedene Ringabschnitte hergestellt werden. Die Grünteile weisen an der Oberseite eine Diamantschicht auf, die bei den ersten Ringabschnitten an der äußeren Mantelfläche und bei den zweiten Ringabschnitten an der inneren Mantelfläche angeordnet ist.

Besonders bevorzugt werden die Anzahl der Diamantschichten und die Größe der Diamantpartikel so eingestellt, dass der mittlere Diamantdurchmesser der Diamantpartikel mindestens 45 % vom Quotienten aus Bohrringbreite und Anzahl der Diamantschichten beträgt. Für die Bearbeitung von armierten Betonwerkstoffen hat es sich als vorteilhaft erwiesen, wenn die kreisförmigen Abtragbahnen, die die Diamantpartikel bei der Bearbeitung beschreiben, möglichst aneinander angrenzen und die Armierungseisen nahezu vollständig von den Diamantpartikeln abgetragen werden. Die Anzahl an Abtragbahnen, die die Diamantpartikel bei der Bearbeitung erzeugen, kann durch die abwechselnde Anordnung bei gleicher Anzahl an Diamantpartikeln verdoppelt werden.

Die Grünteile weisen nach dem schichtweisen Aufbau die geometrische Form eines geraden Prismas mit einer mehreckigen Grundfläche auf. Als mehreckige Grundflächen eignen sich rechteckige Grundflächen, fünfeckige Grundflächen und sechseckige Grundflächen.

In einer ersten Variante werden die Grünteile aus Pulverschichten mit rechteckigen Grundflächen aufgebaut. Die rechteckige Grundfläche stellt die einfachste Geometrie dar, um Bohrringe aus mehreren Ringabschnitten herzustellen. Die Ringabschnitte werden an den Seitenkanten mit den benachbarten Ringabschnitten verbunden.

In einer zweiten Variante werden die Grünteile aus Pulverschichten mit fünfeckigen Grundflächen aufgebaut, wobei die Grundflächen ein Rechteck und ein Trapez mit zwei rechten Innenwinkeln aufweisen. Im Bereich des geneigten Trapezschenkels wird beim Sintern mit dem benachbarten Ringabschnitt ein Wasserschlitz erzeugt. Mit einer solchen fünfeckigen Grundfläche wird bei einem Bohrring mit 2n, n ≥ 1 Ringabschnitten eine Anzahl von n Wasserschlitzen erzeugt.

In einer dritten Variante werden die Grünteile aus Pulverschichten mit sechseckigen Grundflächen aufgebaut, wobei die Grundflächen ein Rechteck und ein gleichschenkliges Trapez aufweisen. Im Bereich der geneigten Trapezschenkel werden beim Sintern mit den benachbarten Ringabschnitten Wasserschlitze erzeugt. Mit einer solchen sechseckigen Grundfläche wird bei einem Bohrring mit n, n ≥ 2 Ringabschnitten eine Anzahl von n Wasserschlitzen erzeugt.

Besonders bevorzugt wird die Höhe des Trapezes zwischen 1/3 und 5/6 der Gesamthöhe des Grünteils eingestellt. Bei Bohrringen, die mit dem Bohrschaft verschweißt werden, wird der Anbindungsbereich ohne Diamanten aufgebaut und ist für die Bearbeitung ungeeignet. Für die Bearbeitung von Untergründen eignet sich die mit Diamantpartikeln versehene Matrixzone, die ca. 5/6 der Gesamthöhe des Grünteils darstellt. Besonders bevorzugt wird die Höhe des Trapezes auf 2/3 der Gesamthöhe des Grünteils eingestellt. Bei einem Anteil von 2/3 der Gesamthöhe kann eine ausreichende Festigkeit des fertigen Bohrringes sichergestellt werden. Während der Bearbeitung mit dem Bohrring muss Kühlflüssigkeit an die Bearbeitungsstelle transportiert werden; daher werden die Wasserschlitze im Bohrring so lang wie möglich ausgebildet.

In einer bevorzugten Weiterentwicklung werden die Ringabschnitte beim Sintern einer Temperatur- und Druckeinwirkung unterzogen. Bei Sinterverfahren mit Temperatur- und Druckeinwirkung, wie dem Heißpressen, läuft das Sintern schneller und bei niedrigerer Temperatur ab als bei Sinterverfahren ohne Druckeinwirkung, wie dem freien Sintern. Da thermische Diamantschädigungen bereits bei 600 °C auftreten, kann eine niedrigere Sintertemperatur ein qualitativer Vorteil sein.

Besonders bevorzugt werden die Ringabschnitte durch die Druckeinwirkung beim Sintern einer zusätzlichen äußeren Formgebung unterzogen. Für die Bearbeitung verschiedener Untergründe haben sich spezielle Dachformen als geeignet erwiesen. Diese Dachformen können durch Druckeinwirkung beim Sintern erzeugt werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Kernbohrkrone bestehend aus einem Bohrring, einem zylinderförmigen Bohrschaft und einem Aufnahmeabschnitt;
- FIGN. 2A-C: eine erste Ausführungsform eines erfindungsgemäßen Bohrringes, der aus vier Ringabschnitten aufgebaut ist, in einer dreidimensionalen Darstellung (FIG. 2A), in einem Querschnitt senkrecht zur Zylinderachse des Bohrringes (FIG. 2B) und in einer Detailvergrösserung (FIG. 2C);
- FIG. 3: eine zweite Ausführungsform eines erfindungsgemäßen Bohrringes, der aus vier Ringabschnitten mit Wasserschlitzen aufgebaut ist;
- FIGN. 4A-D: die Herstellung des Bohrringes der FIG. 3 aus vier gleichen Grünteilen mit einer sechseckigen Grundfläche (FIG. 4A), wobei zwei Grünteile zu konkaven ersten Ringabschnitten und zwei Grünteile zu konvexen zweiten Ringabschnitten umgeformt werden (FIG. 4B), die ersten und zweiten Ringabschnitte entlang einer Umfangsrichtung abwechselnd hintereinander angeordnet werden (FIG. 4C) und unter Temperatur- und Druckeinwirkung zu einem geschlossenen Bohrring verbunden werden (FIG. 4D); und
- FIGN. 5A-C: Grünteile mit einer rechteckigen Grundfläche (FIG. 5A), einer fünfeckigen Grundfläche (FIG. 5B) und einer sechseckigen Grundfläche (FIG. 5C).

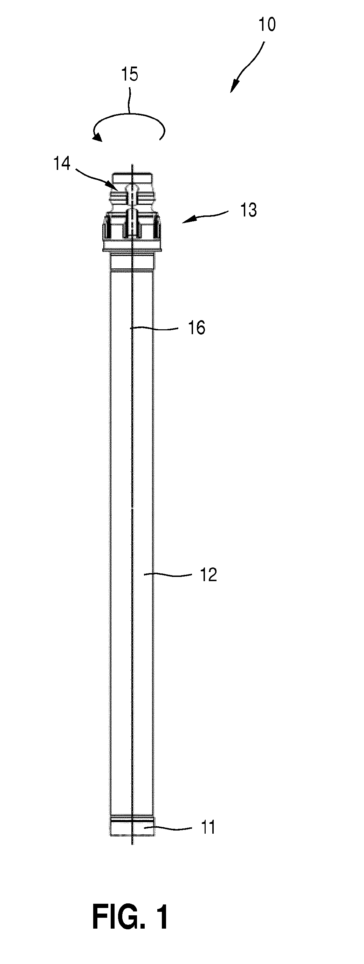

**FIG.** 1 zeigt eine Kernbohrkrone 10 mit einem Bohrring 11, einem zylinderförmigen Bohrschaft 12 und einem Aufnahmeabschnitt 13 mit Einsteckende 14. Die Kernbohrkrone 10 wird über das Einsteckende 14 in der Werkzeugaufnahme eines Kernbohrgerätes befestigt und im Bohrbetrieb vom Kernbohrgerät in einer Drehrichtung 15 um eine Drehachse 16 angetrieben, wobei die Drehachse 16 koaxial zur Zylinderachse der Kernbohrkrone 10 verläuft.

Der Bohrring 11 ist mit dem Bohrschaft 12 verschweißt, verlötet, verschraubt oder in einer anderen geeigneten Befestigungsart am Bohrschaft 12 befestigt. Um den Bohrring 11 mit dem Bohrschaft 12 verschweißen zu können, muss der Verbindungsbereich zwischen Bohrring 11 und Bohrschaft 12 aus einem schweißbaren Material aufgebaut sein und darf keine Diamantpartikel enthalten, da Diamantpartikel nicht schweißbar sind.

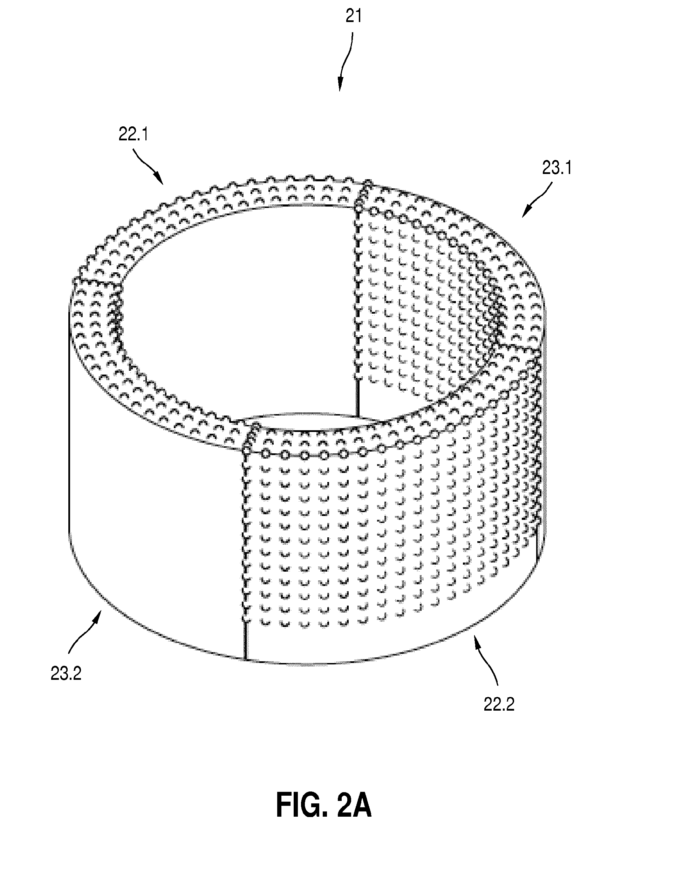

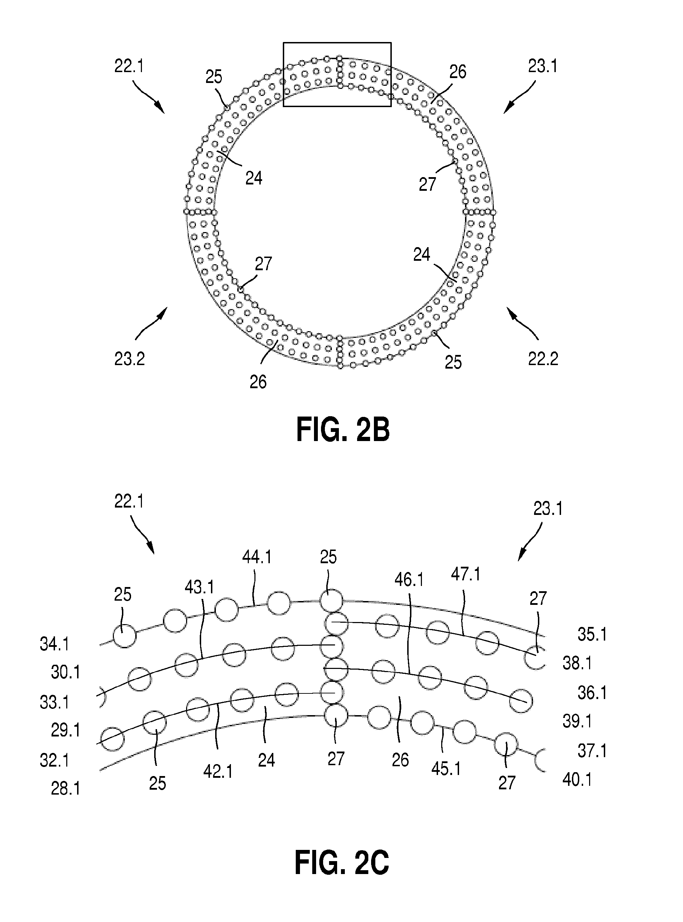

**FIGN. 2A-C** zeigen eine erste Ausführungsform eines erfindungsgemäßen Bohrringes 21, der aus mehreren Ringabschnitten zusammengesetzt ist und den Bohrring 11 der Kernbohrkrone 10 der FIG. 1 ersetzen kann. Dabei zeigt FIG. 2A den Bohrring 21 in einer dreidimensionalen Darstellung, FIG. 2B den Bohrring 21 in einem Querschnitt senkrecht zur Drehachse 16 und FIG. 2C einen Ausschnitt aus dem Querschnitt der FIG. 2B im Verbindungsbereich zwischen zwei Ringabschnitten.

Der Bohrring 21 ist aus vier Ringabschnitten zusammengesetzt, die an den Seitenkanten miteinander verbunden sind und in Umfangsrichtung einen geschlossenen Ring bilden (FIG. 2A). Die Ringabschnitte des Bohrringes 21 lassen sich in zwei erste Ringabschnitte **22.1, 22.2** und zwei zweite Ringabschnitte **23.1, 23.2** unterteilen, die entlang der Umfangsrichtung des Bohrringes 21 abwechselnd hintereinander angeordnet sind. Die ersten Ringabschnitte 22.1, 22.2 bestehen aus einem ersten Pulvergemisch **24** und ersten Diamantpartikeln **25** und die zweiten Ringabschnitte 23.1, 23.2 bestehen aus einem zweiten Pulvergemisch **26** und zweiten Diamantpartikeln **27** (FIG. 2B).

FIG. 2C zeigt einen Ausschnitt aus dem Querschnitt der FIG. 2B im Verbindungsbereich zwischen dem ersten Ringabschnitt 22.1 und dem zweiten Ringabschnitt 23.1. Der erste Ringabschnitt 22.1 ist aus einer Anzahl von **m₁** Pulverschichten des ersten Pulvergemisches 24 und m₁ Diamantschichten der ersten Diamantpartikel 25 aufgebaut. Der zweite Ringabschnitt 23.1 ist aus einer Anzahl von **m₂** Pulverschichten des zweiten Pulvergemisches 26 und m₂ Diamantschichten der zweiten Diamantpartikel 27 aufgebaut. Im Ausführungsbeispiel der FIG. 2 weisen der erste Ringabschnitt 22.1 m₁ = 3 Pulverschichten **28.1, 29.1, 30.1** und m₁ = 3 Diamantschichten **32.1, 33.1, 34.1** und der zweite Ringabschnitt 23.1 m₂ = 3 Pulverschichten **35.1, 36.1, 37.1** und m₂ = 3 Diamantschichten **38.1, 39.1, 40.1** auf.

Die ersten Diamantpartikel 25 der Diamantschichten 32.1-34.1 sind auf drei kreisförmigen ersten Abtragbahnen **42.1, 43.1, 44.1** mit unterschiedlichen ersten Krümmungsradien **R₁ᵢ**. i = 1, 2, 3 angeordnet. Die zweiten Diamantpartikel 27 der Diamantschichten 38.1-40.1 sind auf drei kreisförmigen zweiten Abtragbahnen **45.1, 46.1, 47.1** mit unterschiedlichen zweiten Krümmungsradien **R₂ᵢ,** i = 1, 2, 3 angeordnet. Die Auswahl der Werkstoffe für das erste und zweite Pulvergemisch 24, 26, die Auswahl der Diamantverteilung und -größe für die ersten und zweiten Diamantpartikel 25, 27 und die Anzahl m₁, m₂ der Diamantschichten und Abtragbahnen ermöglichen die Anpassung des Bohrringes 21 an unterschiedliche zu bearbeitende Untergründe.

Die Ringabschnitte 22.1, 22.2, 23.1, 23.2 sind schichtweise aus drei Pulverschichten und drei Diamantschichten aufgebaut. Beim schichtweisen Aufbau wird das Pulvergemisch in eine Matrize gefüllt und bildet die erste Pulverschicht. Die Diamantpartikel werden in einem Setzmuster als erste Diamantschicht auf bzw. in die erste Pulverschicht platziert. Um den Schichtaufbau zu verdichten, kann nach dem Platzieren der Diamantpartikel eine Zwischenpressung erfolgen. Anschließend wird das Pulvergemisch in die Matrize gefüllt und bildet die zweite Pulverschicht. Die Diamantpartikel werden in einem Setzmuster als zweite Diamantschicht auf bzw. in die zweite Pulverschicht platziert. Dieser Vorgang wird solange wiederholt, bis die gewünschte Aufbauhöhe des Grünteils erreicht ist. Als letzte Schicht wird eine Diamantschicht verwendet.

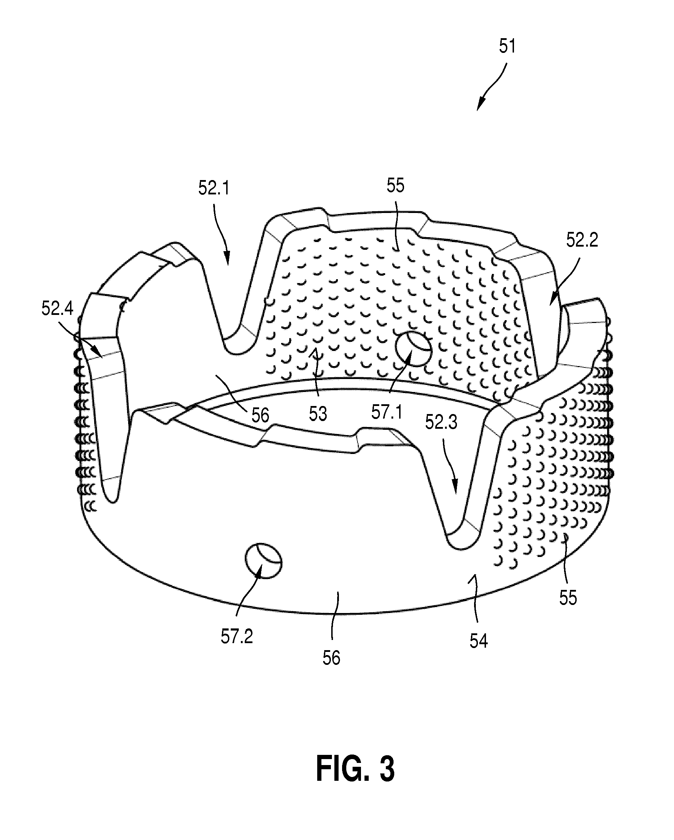

**FIG. 3** zeigt eine zweite Ausführungsform eines erfindungsgemäßen Bohrringes **51,** der aus vier Ringabschnitten besteht und den Bohrring 11 der Kernbohrkrone 10 ersetzen kann. Zwischen den Ringabschnitten sind vier Wasserschlitze **52.1, 52.2, 52.3, 52.4** ausgebildet, über die eine Kühlflüssigkeit an die Bearbeitungsstelle transportiert wird. Die Ringabschnitte sind so angeordnet, dass der Bohrring 51 an der Innenseite **53** und an der Außenseite **54** abwechselnd einen diamantbesetzten Bereich **55** und einen diamantlosen Bereich **56** aufweist.

Die Wasserschlitze 52.1-52.4 erstrecken sich über eine Höhe von ca. 2/3 der Gesamthöhe des Bohrringes 51. Um die Funktionsfähigkeit des Bohrringes 51 sicherzustellen, wenn die Wasserschlitze 52.1-52.4 abgetragen sind, weisen zwei Ringabschnitte eine Bohrung **57.1, 57.2** auf, über die Kühlflüssigkeit an die Bearbeitungsstelle transportiert wird.

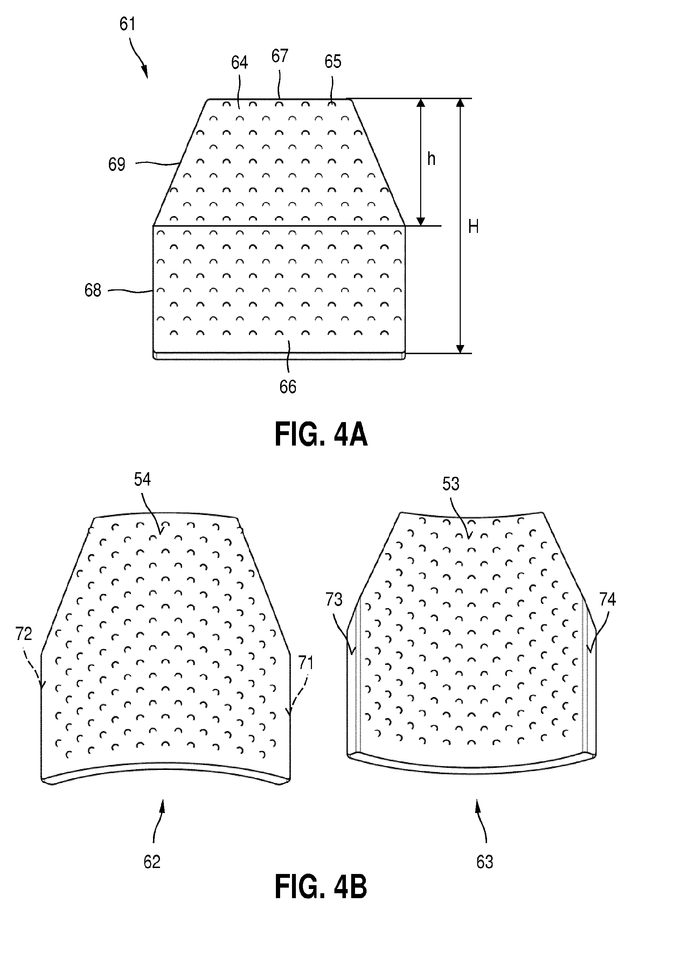

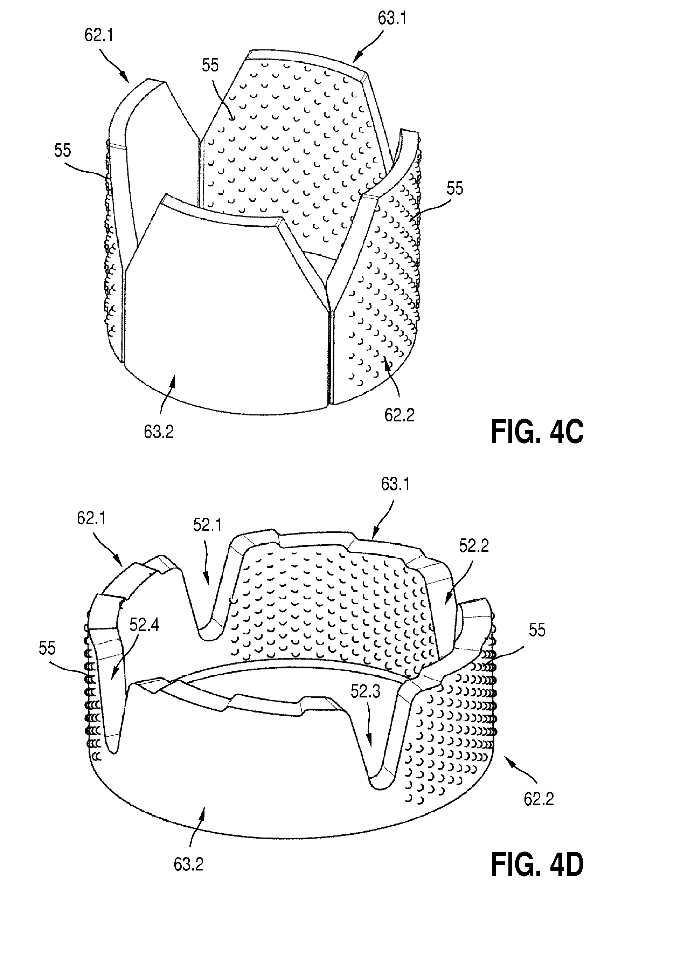

**FIGN. 4A-D** zeigen die Herstellung des Bohrringes 51 aus vier gleichen Grünteilen **61** mit einer sechseckigen Grundfläche (FIG. 4A). Zwei Grünteile 61 werden zu konkaven ersten Ringabschnitten **62** und zwei Grünteile 61 zu konvexen zweiten Ringabschnitten **63** umgeformt (FIG. 4B). Die ersten und zweiten Ringabschnitte 62, 63 werden entlang einer Umfangsrichtung des Bohrringes 51 abwechselnd hintereinander angeordnet (FIG. 4C) und unter Temperatur- und Druckeinwirkung zu einem geschlossenen Bohrring gesintert (FIG. 4D).

FIG. 4A zeigt den Aufbau des Grünteils 61, das schichtweise aus Pulverschichten eines Pulvergemisches **64** und Diamantschichten von Diamantpartikeln **65** hergestellt wurde. Das Grünteil 61 besteht aus einem Anbindungsbereich **66,** der auch als Fußzone bezeichnet wird, und einem Bearbeitungsbereich **67,** der auch als Matrixzone bezeichnet wird. Der Anbindungsbereich 66 und der Bearbeitungsbereich 67 können gemeinsam schichtweise aufgebaut werden, wobei im Anbindungsbereich keine Diamantpartikel 65 gesetzt werden. Alternativ kann der Anbindungsbereich als separater Bereich hergestellt und beim Sintern mit dem Bearbeitungsbereich verbunden werden.

Die Grundfläche der Grünteile 61 ist sechseckig ausgebildet und besteht aus einem Rechteck **68** und einem angrenzenden gleichschenkligen Trapez **69,** wobei sich der Anbindungsbereich 66 des Grünteils 61 im Rechteck 68 befindet. Im Bereich der Trapezschenkel werden beim Sintern durch zusätzliche Druckeinwirkung die Wasserschlitze 52.1-52.4 ausgebildet, über die Kühlflüssigkeit an die Bearbeitungsstelle transportiert wird. Die Höhe h des Trapezes 69 im Grünteil legt die Höhe der Wasserschlitze 52.1-52.4 fest. Im Ausführungsbeispiel entspricht die Höhe h des Trapezes 69 der halben Gesamthöhe **H** des Grünteils 61.

FIG. 4B zeigt den ersten Ringabschnitt 62, der aus dem Grünteil 61 der FIG. 4A unter Druckeinwirkung mit einer konvexen Krümmung erzeugt wurde, und den zweiten Ringabschnitt 63, der aus dem Grünteil 61 der FIG. 4A unter Druckeinwirkung mit einer konkaven Krümmung erzeugt wurde. Beim ersten Ringabschnitt 62 ist die Oberseite des Grünteils 61, die als Diamantschicht ausgebildet ist, auf der Außenseite 54 und beim zweiten Ringabschnitt 63 ist die Oberseite des Grünteils 61 auf der Innenseite 53 angeordnet.

Der erste Ringabschnitt 62 weist eine erste und zweite Seitenkante **71, 72** auf, die beim Sintern mit einer ersten und zweiten Seitenkante **73, 74** des zweiten Ringabschnittes 63 verbunden werden. Dabei werden die erste Seitenkante 71 des ersten Ringabschnittes 62 mit der zweiten Seitenkante 74 des zweiten Ringabschnittes 63 und die zweite Seitenkante 72 des ersten Ringabschnittes 62 mit der ersten Seitenkante 73 des zweiten Ringabschnittes 63 verbunden. Beim Bohrring 51 mit zwei ersten und zweiten Ringabschnitten 62.1, 62.2, 63.1, 63.2 werden jeweils die ersten und zweiten Seitenkanten der benachbarten Ringabschnitte miteinander verbunden.

FIG. 4C zeigt die ersten Ringabschnitte 62.1, 62.2 und zweiten Ringabschnitte 63.1, 63.2, die entlang einer Umfangsrichtung des Bohrringes 51 abwechselnd hintereinander angeordnet sind. Die Ringabschnitte 62.1, 63.1, 62.2, 63.2 bilden einen geschlossenen Bohrring und werden in der in FIG. 4C gezeigten Anordnung in einer Heißpresse weiter bearbeitet. FIG. 4D zeigt den geschlossenen Bohrring nach dem Heißpressen. Beim Heißpressen werden die Ringabschnitte 62.1, 63.1, 62.2, 63.2 einer Temperatur- und Druckeinwirkung unterzogen. Die Temperatureinwirkung sorgt dafür, dass das Pulvergemisch in den Ringabschnitten gesintert wird und die Ringabschnitte an den Seitenkanten miteinander verbunden werden. Durch Druckeinwirkung in axialer Richtung, d.h. parallel zur Drehachse des Bohrringes, erfolgt eine Kompression der Ringabschnitte, die zu einer Verdichtung der Ringabschnitte führt. Das Heißpressen erfolgt in einer Matrize, die die endgültige Form des Bohrringes festlegt.

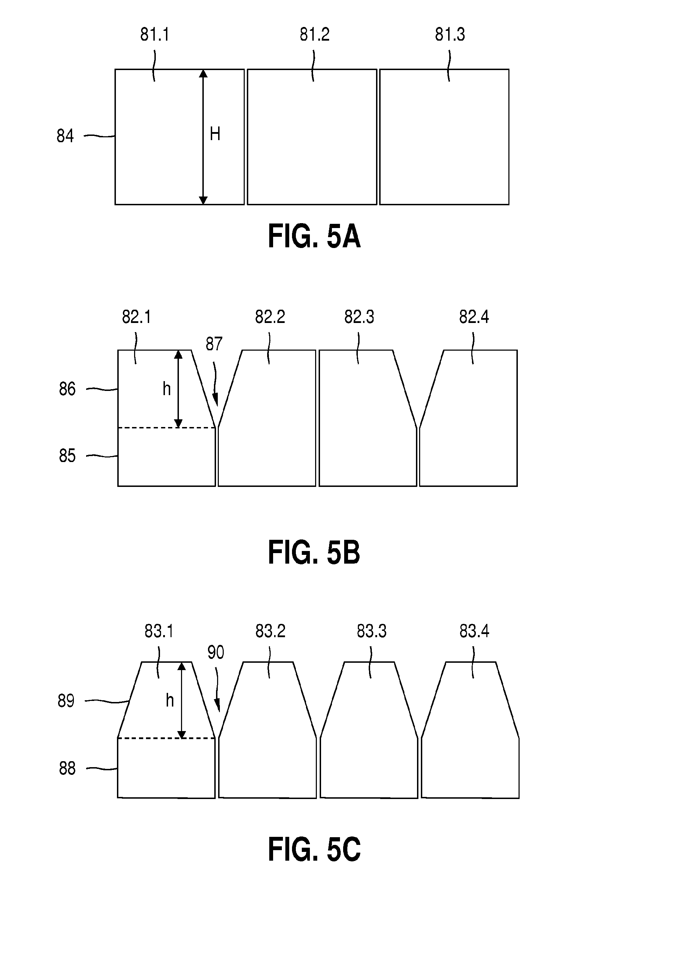

Ein Bohrring wird beim erfindungsgemäßen Verfahren aus mehreren Grünteilen aufgebaut, die zu Ringabschnitten umgeformt werden und zu einem geschlossenen Bohrring gesintert werden; als Geometrie für die Grünteile eignen sich mehreckige Grundflächen. **FIGN. 5A-C** zeigen Grünteile **81** mit einer rechteckigen Grundfläche (FIG. 5A), Grünteile **82** mit einer fünfeckigen Grundfläche (FIG. 5B) und Grünteile **83** mit einer sechseckigen Grundfläche (FIG. 5C).

Die rechteckige Grundfläche **84** der Grünteile 81 stellt die einfachste Geometrie dar, um Bohrringe aus mehreren Ringabschnitten herzustellen. Im Ausführungsbeispiel der FIG. 5A werden drei gleiche Grünteile 81.1, 81.2, 81.3 verwendet, um einen geschlossenen Bohrring herzustellen.

Die fünfeckige Grundfläche der Grünteile 82 lässt sich in ein Rechteck **85** und ein Trapez **86** mit zwei rechten Innenwinkeln unterteilen. Im Bereich des geneigten Trapezschenkels wird beim Sintern mit dem benachbarten Ringabschnitt ein Wasserschlitz **87** erzeugt. Mit einer solchen fünfeckigen Grundfläche wird bei einem Bohrring mit 2n, n ≥ 1 Ringabschnitten eine Anzahl von n Wasserschlitzen 87 erzeugt.

Die sechseckige Grundfläche der Grünteile 83 lässt sich in ein Rechteck **88** und ein gleichschenkliges Trapez **89** unterteilen. Im Bereich der geneigten Trapezschenkel werden beim Sintern mit den benachbarten Ringabschnitten Wasserschlitze **90** erzeugt. Mit einer solchen sechseckigen Grundfläche wird bei einem Bohrring mit n, n ≥ 2 Ringabschnitten eine Anzahl von n Wasserschlitzen 90 erzeugt.

## Patentansprüche

1. Verfahren zur Herstellung eines geschlossenen Bohrringes (21; 51) für eine Kernbohrkrone (10), mit den Schritten:
▪ mindestens zwei Grünteile (61; 81, 82, 83) werden in einer Aufbaurichtung durch aufeinanderfolgendes Auftragen von Pulverschichten (28, 29, 30, 35, 36, 37) eines Pulvergemisches (24, 26; 64) und Diamantschichten (32, 33, 34, 38, 39, 40) mit Diamantpartikeln (25, 27; 65), die in einem Setzmuster angeordnet sind, zwischen einer Unterseite und einer Oberseite schichtweise aufgebaut,
▪ die Grünteile (61; 81, 82, 83) werden unter Druckeinwirkung zu Ringabschnitten (22, 23; 62, 63) umgeformt und
▪ die Ringabschnitte (22, 23; 62, 63) werden ringförmig zusammengesetzt und unter Temperatureinwirkung zu einem geschlossenen Bohrring (21, 51) gesintert.

2. Verfahren nach Anspruch 1, **dadurch gekennzeichnet, dass** der Bohrring (21) aus einer Anzahl von n, n ≥ 1 ersten Grünteilen, die zu ersten Ringabschnitten (22.1, 22.2) umgeformt werden, und n zweiten Grünteilen, die zu zweiten Ringabschnitten (23.1, 23.2) umgeformt werden, aufgebaut wird, wobei die ersten und zweiten Ringabschnitte (22.1, 22.2, 23.1, 23.2) entlang einer Umfangsrichtung des Bohrringes (21) abwechselnd hintereinander angeordnet werden.

3. Verfahren nach Anspruch 2, **dadurch gekennzeichnet, dass** die ersten Ringabschnitte (22.1, 22.2) aus einem ersten Pulvergemisch (24) und ersten Diamantpartikeln (25) und die zweiten Ringabschnitte (23.1, 23.2) aus einem zweiten Pulvergemisch (26) und zweiten Diamantpartikeln (27) aufgebaut werden.

4. Verfahren nach Anspruch 1, **dadurch gekennzeichnet, dass** der Bohrring (51) aus einer Anzahl von 2n, n ≥ 1 gleichen Grünteilen (61) aufgebaut wird, wobei n Grünteile (61) unter Druckeinwirkung mit einer konvexen Krümmung zu ersten Ringabschnitten (62.1, 62.2) und n Grünteile (61) unter Druckeinwirkung mit einer konkaven Krümmung zu zweiten Ringabschnitten (63.1, 63.2) umgeformt werden.

5. Verfahren nach Anspruch 4, **dadurch gekennzeichnet, dass** die Oberseite der Grünteile (61) bei den ersten Ringabschnitten (62.1, 62.2) auf der Außenseite (54) und bei den zweiten Ringabschnitten (63.1, 63.2) auf der Innenseite (53) angeordnet ist, wobei die ersten und zweiten Ringabschnitte (62.1, 62.2, 63.1, 63.2) entlang einer Umfangsrichtung des Bohrringes (51) abwechselnd hintereinander angeordnet werden.

6. Verfahren nach Anspruch 5, **dadurch gekennzeichnet, dass** die Anzahl der Diamantschichten (m₁, m₂) und die Größe der Diamantpartikel (25, 27; 65) so eingestellt werden, dass der mittlere Diamantdurchmesser der Diamantpartikel (25, 27; 65) mindestens 45 % vom Quotienten aus Breite des Bohrringes (21; 51) und Anzahl der Diamantschichten (m₁, m₂) beträgt.

7. Verfahren nach einem der Ansprüche 1 bis 6, **dadurch gekennzeichnet, dass** die Grünteile (81) aus Pulverschichten mit rechteckigen Grundflächen (84) aufgebaut werden.

8. Verfahren nach einem der Ansprüche 1 bis 6, **dadurch gekennzeichnet, dass** die Grünteile (82) aus Pulverschichten mit fünfeckigen Grundflächen aufgebaut werden, wobei die Grundflächen ein Rechteck (85) und ein Trapez (86) mit zwei rechten Innenwinkeln aufweisen.

9. Verfahren nach einem der Ansprüche 1 bis 6, **dadurch gekennzeichnet, dass** die Grünteile (83) aus Pulverschichten mit sechseckigen Grundflächen aufgebaut werden, wobei die Grundflächen ein Rechteck (88) und ein gleichschenkliges Trapez (89) aufweisen.

10. Verfahren nach einem der Ansprüche 8 bis 9, **dadurch gekennzeichnet, dass** die Höhe des Trapezes (86, 89) zwischen 1/3 und 5/6 der Gesamthöhe (H) des Grünteils (82, 83) eingestellt wird.

11. Verfahren nach Anspruch 1, **dadurch gekennzeichnet, dass** die Ringabschnitte (22, 23; 62, 63) beim Sintern einer Temperatur- und Druckeinwirkung unterzogen werden.

12. Verfahren nach Anspruch 11, **dadurch gekennzeichnet, dass** die Ringabschnitte (62, 63) durch die Druckeinwirkung beim Sintern einer zusätzlichen äußeren Formgebung unterzogen werden.
